# EUROPEAN PATENT APPLICATION

(11) **EP 4 287 299 A1**
(43) Date of publication of application: **06.12.2023**
(21) Application number: 22746306.4
(22) Date of filing: 28.01.2022
(51) Int. Cl.: H01M 4/13, H01M 4/66, H01M 4/62, H01M 4/04, H01M 4/139, H01M 4/02

(54) **ELECTRODE**

(30) Priority: 29.01.2021 KR 20210013168; 29.01.2021 KR 20210013325; 29.01.2021 KR 20210013326
(71) Applicant: LG Chem, Ltd., Yeongdeungpo-gu Seoul 07336 (KR)
(72) Inventor: LEE, Ho Chan, Daejeon 34122 (KR); SONG, In Taek, Daejeon 34122 (KR); LEE, Il Ha, Daejeon 34122 (KR); LEE, Geun Sung, Daejeon 34122 (KR); KIM, Ki Hwan, Daejeon 34122 (KR); MOK, Yeong Bong, Daejeon 34122 (KR); PARK, Jin Woo, Daejeon 34122 (KR)
(74) Representative: Goddar, Heinz J.
(86) International application number: PCT/KR2022/001652
(87) International publication number: WO 2022/164280

(57) **Abstract**

The present application relates to an electrode comprising a current collector and an active material layer, which can provide an electrode capable of securing a high level of adhesion force between particles and adhesion force between the active material layer and the current collector relative to the content of binder in the active material layer. The present application can also provide a use of the electrode.

## Description

### Technical Field

This application claims the benefit of priority based on Korean Patent Application No. 10-2021-0013168 filed on January 29, 2021, Korean Patent Application No. 10-2021-0013325 filed on January 29, 2021, and Korean Patent Application No. 10-2021-0013326 filed on January 29, 2021, the disclosures of which are incorporated herein by reference in their entirety.

The present application relates to an electrode, a method for manufacturing the same, and a use thereof.

### Background Art

The application area of energy storage technology expands to mobile phones, camcorders, notebook PCs, electric vehicles, and the like.

One of the research fields of energy storage technology is a secondary battery capable of charging and discharging, and research and development for improving the capacity density and specific energy of such a secondary battery are conducted.

An electrode (positive electrode or negative electrode) applied to a secondary battery is usually manufactured by forming an active material layer comprising an electrode active material and a binder on a current collector.

In order to smoothly induce the inter-active material electron movement, and the electron movement between the current collector and the active material layer in the electrode of the secondary battery, the adhesion force between the active material particles, and the adhesion force between the active material layer and the current collector must be secured.

In addition, when the adhesion force between the particles in the active material layer is insufficient, a phenomenon that the particles fall off from the electrode may occur, where such a phenomenon deteriorates the stability and performance of the battery. For example, particles falling off due to insufficient adhesion force between particles from the surfaces of the negative electrode and the positive electrode may cause a microshort or the like inside the battery, thereby causing deterioration of performance and a fire due to a short circuit.

When the adhesion force between the active material layer and the current collector is lowered, the movement speed of electrons between the active material layer and the current collector is reduced, which may also cause deterioration of the speed characteristics and cycle characteristics.

The adhesion force between the particles in the active material layer, or the adhesion force between the active material layer and the current collector is secured by the binder.

Therefore, if the more binder is introduced into the active material layer, the higher adhesion force may be secured.

However, in this case, the ratio of the active material decreases as the ratio of the binder increases, so that there is a problem of deterioration of the battery performance due to an increase in electrode resistance, a decrease in conductivity, and the like.

### Disclosure

### Technical Problem

The present application relates to an electrode, a method for manufacturing the same, and a use thereof. It is one object of the present application to provide an electrode capable of securing a high level of interparticle adhesion force, and adhesion force between an active material layer and a current collector compared to a binder content in the active material layer.

### Technical Solution

Among the physical properties mentioned in this specification, physical properties in which the measurement temperature affects results are results measured at room temperature, unless otherwise specified.

The term room temperature is a natural temperature without warming or cooling, which means, for example, any one temperature within the range of 10°C to 30°C, or a temperature of about 23°C or about 25°C or so.

Also, in this specification, the unit of temperature is Celsius (°C), unless otherwise specified.

Among the physical properties mentioned in this specification, physical properties in which the measurement pressure affects results are results measured at normal pressure, unless otherwise specified.

The term normal pressure is a natural pressure without pressurizing or depressurizing, which usually means an atmospheric pressure at the atmospheric pressure level, and means, for example, an atmospheric pressure of about 740 to 780 mmHg or so.

In the case of a physical property in which the measurement humidity affects results, the relevant physical property is a physical property measured at natural humidity that is not specifically controlled at the room temperature and/or normal pressure state.

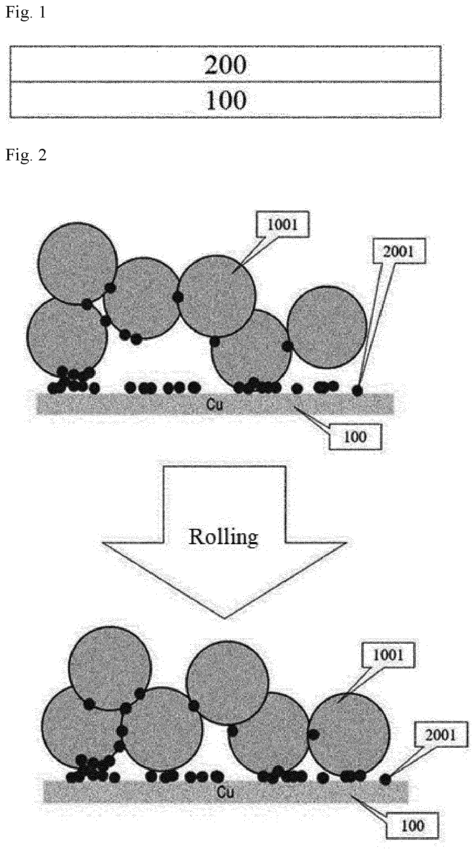

The electrode of the present application comprises a current collector; and an active material layer present on one or both sides of the current collector. Figure 1 shows a structure in which the active material layer (200) is present on one side of the current collector (100). In the electrode structure, the active material layer may also be formed in contact with the surface of the current collector, or another layer may also exist between the current collector and the active material layer. For example, as described below, an intermediate layer may also exist between the current collector and the active material layer.

The active material layer may comprise at least an electrode active material and a binder.

In the present application, high adhesion force between particles in the active material layer may be ensured, and simultaneously high adhesion force between the active material layer and the current collector may be secured, through controlling the distribution of the binder in the active material layer, particularly the distribution of the binder in the active material layer adjacent to the current collector. The active material layer basically comprises an electrode active material and a binder, where the adhesion force is expressed by the binder. Therefore, in order to secure the adhesion force, it is necessary to place as many binders as possible at positions where the expression of the adhesion force is required.

To this end, the affinity of the respective components in a slurry used to form the active material layer, or the affinity of the respective components in the slurry with the current collector must be carefully considered. Since there is a phenomenon that the binder is subjected to migration to the upper part of the active layer during the electrode formation process or after the electrode is manufactured, it is not an easy object to control the binder so that it can be placed at positions where the expression of adhesion force is required, and when the content of the binder in the slurry is small, this control is not even easier. For example, as conceptually shown in Figure 2, the phenomenon that the binder (2001) normally present in the active material layer migrates to the upper part of the active material layer during the electrode manufacturing process and/or after the manufacture occurs, so that it is not easy to properly distribute the binder (2001) in the inter- electrode active material (1001) and/or between the electrode active material (1001) and the current collector (100). That is, among the binder distributed on the current collector, the binder contributing to the improvement of the adhesion force is a part, and when the proportion of the binder in the active material layer is small, this tendency is further increased.

In the present application, it is possible to provide an electrode capable of achieving excellent adhesion force even under a small binder content by intensively distributing the binder in a portion requiring adhesion force improvement (for example, between the surface of the current collector and the electrode active material, etc.).

In the present application, the area ratio and height of the occupied region of the binder confirmed by the standard peel test are adjusted to a high level compared to the content of the binder included in the active material layer.

The term area ratio of the occupied region of the binder is a percentage (100×A1/A2) of an area (A1) of the region (the occupied region of the binder) where the binder component is confirmed to be present on the surface of the current collector after a standard peel test to be described below to the total surface area (A2) of the current collector. Here, the region where the binder component is confirmed to be present can be confirmed in the manner described in Examples through FE-SEM (Field Emission Scanning Electron Microscope) analyses. In the confirmation process, a binder is included in the region where the binder component is confirmed to be present, and in some cases, other additional components (e.g., a thickener, etc.) may also be included.

The term height of the occupied region of the binder is the height of the occupied region of the binder, which can be confirmed in the manner described in Examples. Here, in the case where there is a plurality of occupied regions of the binder and the heights of the respective occupied regions are different from each other, the height may be the average height, maximum height, or minimum height of the occupied regions of the binder.

In one example, the ratio (A/W) of the area ratio (A) of the occupied region of the binder and the content (W) of the electrode active material in the active material layer, which is confirmed in the following standard peel test performed on the electrode, may be 17 or more.

Since the unit of the occupied region ratio A is % and the unit of the binder content is % by weight (weight%), the unit of the ratio A/W may be weight⁻¹ (wt⁻¹).

The content of the binder is substantially the same as the content ratio of the binder in the solid content (part excluding the solvent) of the relevant slurry when the compositions of the slurry in the electrode manufacturing process are known. In addition, when the compositions of the slurry in the electrode manufacturing process are unknown, the content of the binder may be confirmed through a TGA (thermogravimetric analysis) analysis of the active material. For example, when a SBR (Styrene-Butadiene Rubber) binder is applied as the binder, the content of the binder can be confirmed through the content of the SBR binder obtained from the 370°C to 440°C decrease of the temperature-mass curve obtained by performing the TGA analysis of the active material layer, and increasing the temperature at a rate of 10°C per minute.

In another example, the ratio A/W may be 17.5 or more, 18 or more, 18.5 or more, 19 or more, 19.5 or more, 20 or more, 20.5 or more, 21 or more, 21.5 or more, 22 or more, 22.5 or more, 23 or more, 23.5 or more, 24 or more, 24.5 or more, 25 or more, or 25.5 or more, or may also be 50 or less, 49 or less, 48 or less, 47 or less, 46 or less, 45 or less, 44 or less, 43 or less, 42 or less, 41 or less, 40 or less, 39 or less, 38 or less, 37 or less, 36 or less, 35 or less, 34 or less, 33 or less, 32 or less, 31 or less, 30 or less, 29 or less, 28 or less, 27 or less, 26 or less, 25 or less, 24 or less, 23 or less, or 22 or less or so.

It is possible to provide an electrode securing a high level of adhesion force relative to the binder content applied under such an A/W ratio.

Here, the ratio (H_{B}/B_{D}) of the height (H_{B}) of the occupied region of the binder to the average particle diameter (B_{D}) of the particulate binder may be 0.5 or more. Here, the average particle diameter of the binder is a particle diameter (median diameter) at 50% cumulative in a volume-based cumulative graph obtained by a laser diffraction method, as described below. Therefore, among the real binders, there are also binders having a smaller particle diameter than the average particle diameter, and the particle diameter of the binder may also be slightly changed by a rolling process or the like of the electrode manufacturing process, so that the lower limit of the ratio (H_{B}/B_{D}) may be 0.5. In another example, the ratio may be 0.6 or more, 0.7 or more, 0.9 or more, 1 or more, 2 or more, 3 or more, 4 or more, 5 or more, 6 or more, 7 or more, 8 or more, 9 or more, or 10 or more or so, or may also be 10 or less, 9 or less, 8 or less, 7 or less, 6 or less, 5 or less, 4 or less, 3 or less, 2 or less, or 1 or less or so.

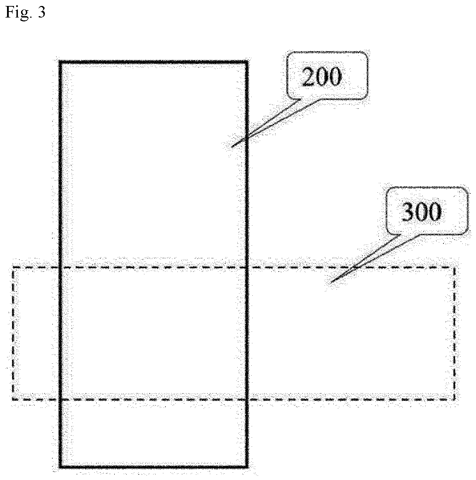

The standard peel test is performed using 3M's Scotch Magic Tape Cat. 810R. In order to perform the standard peel test, first, the electrode is cut to a size of 20 mm or so in width and 100 mm or so in length. The Scotch Magic Tape Cat. 810R is also cut so that the horizontal length is 10 mm and the vertical length is 60 mm. Thereafter, as shown in Figure 3, the Scotch Magic Tape Cat. 810R (300) is attached in a cross state on the active material layer (200) of the electrode. The attachment may be performed so that a certain portion of the Magic Tape Cat. 810R (300) for the standard peel test protrudes. Then, the Magic Tape Cat. The 810R (300) is peeled off by holding the protruding portion. At this time, the peel rate and the peel angle are not particularly limited, but the peel rate may be about 20mm/sec or so, and the peel angle may be about 30 degrees or so. In addition, the attachment of the Scotch Magic Tape Cat. 810R (300) is performed by reciprocating and pushing the surface of the tape with a roller having a weight of 1 kg or so and a radius and a width of 50 mm and 40 mm, respectively, once after attaching the tape.

When the Scotch Magic Tape Cat. 810R (300) is peeled off through the above process, the component of the active material layer (200) is peeled off together with the Scotch Magic Tape Cat. 810R (300). Subsequently, the above process is repeated using the new Scotch Magic Tape Cat. 810R (300).

The standard peel test may be performed by performing this process until no component of the active material layer (200) comes off on the Scotch Magic Tape Cat. 810R (300) to be observed.

Regarding the matter that no component of the active material layer (200) comes off on the Scotch Magic Tape Cat. 810R (300), when the surface of the Scotch Magic Tape peeled from the active material layer is compared with the surface of the unused Scotch Magic Tape so that the tones of both are substantially the same, it may be determined that the component of the active material layer does not come off (visual observation).

A specific way to run the standard peel test is described in Examples.

After the above standard peel test, the occupied area ratio of the binder on the current collector can be confirmed.

The type of the current collector applied in the present application is not particularly limited, where a known current collector may be used. In order to implement the above-described ratio A/W, the surface characteristics (water contact angle, etc.) of the current collector may be controlled, as described below. As the current collector, for example, a film, sheet, or foil made of stainless steel, aluminum, nickel, titanium, baked carbon, copper, carbon, stainless steel surface-treated with nickel, titanium or silver, an aluminum-cadmium alloy, and the like may be used. In order to realize the desired binder distribution, one having surface characteristics to be described below may be selected from the current collectors, or the surface characteristics may be adjusted by additional treatment.

The thickness and shape of the current collector, and the like are not particularly limited, and an appropriate type is selected within a known range.

In the electrode of the present application, the surface characteristics of the current collector may be controlled in order to achieve an appropriate distribution of the binder. For example, in the electrode, an intermediate layer may exist between the active material layer and the current collector.

The present application may comprise, for example, an intermediate layer including silicon between the active material layer and the current collector. As the electrode of the present application comprises an intermediate layer containing silicon as above, and simultaneously, through control of the compositions of the slurry to be described below (for example, affinity of the solvent with the binder), and/or the average particle diameter of the particulate material in the slurry, and the like, it is possible to provide an electrode having excellent adhesion force relative to the binder content.

The intermediate layer may be, for example, a layer comprising a compound of Formula 1 below.

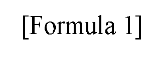

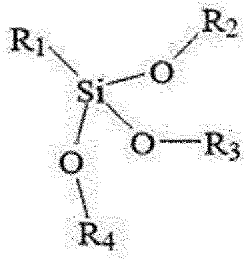

In Formula 1, R₁ is an alkyl group with 11 or less carbon atoms or an alkenyl group with 11 or less carbon atoms, where the alkyl group of R₁ may be optionally substituted with one or more amino groups, and R₂ to R₄ are each independently an alkyl group with 1 to 4 carbon atoms.

The alkyl group or alkenyl group in Formula 1 may be linear, branched, or cyclic, and in a suitable example, it may be a linear alkyl group or alkenyl group.

In one example, R₁ in Formula 1 may be a linear alkyl group with 1 to 10 carbon atoms, 1 to 9 carbon atoms, 1 to 8 carbon atoms, 1 to 7 carbon atoms, 1 to 6 carbon atoms, 1 to 4 carbon atoms, or 2 to 4 carbon atoms, or may be a linear alkenyl group with 2 to 10 carbon atoms, 2 to 9 carbon atoms, 2 to 8 carbon atoms, 2 to 7 carbon atoms, 2 to 6 carbon atoms, 2 to 4 carbon atoms, or 2 to 3 carbon atoms, or may be a linear aminoalkyl group with 1 to 10 carbon atoms, 1 to 9 carbon atoms, 1 to 8 carbon atoms, 1 to 7 carbon atoms, 1 to 6 carbon atoms, 1 to 4 carbon atoms, or 2 to 4 carbon atoms.

The intermediate layer may comprise the silane compound of Formula 1 as a main component, where for example, the content of the silane compound of Formula 1 in the intermediate layer may be 70 weight% or more, 75 weight% or more, 80 weight% or more, 85 weight% or more, 90 weight% or more, or 95 weight% or more or so. The upper limit of the content of the silane compound in the intermediate layer is 100 weight%. When a component other than the silane compound of Formula 1 is present in the intermediate layer, the component may be a component such as a solvent used in the intermediate layer formation process, or may be an active material layer constituent that has been mitigated from the active material layer.

The thickness of the intermediate layer may be appropriately set in consideration of desired surface characteristics, which may be, for example, in the range of approximately 0.5µm to 50µm.

In another example, the thickness may be about 1 µm or more, 3 µm or more, 5 µm or more, 7 µm or more, or 9 µm or more or so, or may also be about 45 µm or less, 40 µm or less, 35 µm or less, 30 µm or less, 25 µm or less, 20 µm or less, or 15 µm or less or so.

In the electrode of the present application, by introducing the intermediate layer between the active material layer and the current collector, it is possible to control the surface characteristics of the current collector, as described below, and through this, the migration phenomenon of the binder to the upper part may be controlled, and the binder may be appropriately distributed at positions where expression of adhesion force between the particles and/or between the current collector interface and the active material layer is required. The reason is not clear, but when such a slurry is coated on the current collector whose surface characteristics are controlled as above, it is expected that the dispersion state of the binder in the slurry, the affinity between the solvent of the slurry and the current collector whose surface characteristics are controlled, the affinity of the current collector whose surface characteristics are controlled with the binder in the slurry and/or the particle diameter relationship therebetween in the case where the particulate material is applied, and the like are mutually combined with each other to control the position of the binder of the desired shape.

The present application can also achieve the object more effectively through additional control of the compositions of the active material layer (e.g., affinity of the solvent with the binder) and/or the particle diameter characteristics of the particulate material in the slurry, and the like.

The active material layer may comprise, for example, an electrode active material and a binder.

A known material may be used as the binder, and components known to contribute to bonding of components such as the active material in the active material layer and bonding of the active material layer and the current collector may be used. As the applicable binder, one, or a combination of two or more selected from PVDF (poly(vinylidene fluoride)), PVA (poly(vinyl alcohol)), polyvinylpyrrolidone, tetrafluoroethylene, polyethylene, polypropylene, an ethylene-propylene-diene terpolymer (EPDM), a sulfonated EPDM, SBR (Styrene-Butadiene rubber), fluororubber, and other known binders may be used.

For proper binder distributions, and the like, it is appropriate to use a particulate binder as the binder.

When a particulate material is used as the electrode active material, a ratio of particle diameters between the particulate binder and the electrode active material layer may be controlled in order to control the distribution of the binder in the electrode active material layer.

For example, the ratio (D1/D2) of the average particle diameter (D1, unit nm) of the particulate electrode active material to the average particle diameter (D2, unit nm) of the particulate binder may be in the range of 10 to 1,000. In another example, the ratio (D1/D2) may be 20 or more, 30 or more, 40 or more, 50 or more, 60 or more, 70 or more, 80 or more, 90 or more, 100 or more, 110 or more, 120 or more, or 130 or more, or may be 900 or less, 800 or less, 700 or less, 600 or less, 500 or less, 400 or less, 300 or less, 200 or less, or 150 or less or so.

Here, the binder may have an average particle diameter (D2) in a range of 50 nm to 500 nm. In another example, the average particle diameter (D2) of the binder may be about 70 nm or more, about 90 nm or more, about 110 nm or more, about 130 nm or more, or about 140 nm or more, or may be about 480 nm or less, about 460 nm or less, 440 nm or less, 420 nm or less, 400 nm or less, about 380 nm or less, about 360 nm or less, about 340 nm or less, about 320 nm or less, about 300 nm or less, about 280 nm or less, about 260 nm or less, about 240 nm or less, about 220 nm or less, about 200 nm or less, about 180 nm or less, or about 160 nm or less or so.

Here, the electrode active material may have an average particle diameter (D1) in a range of 1 µm to 100 µm. In another example, the average particle diameter (D1) may be about 3 µm or more, about 5 µm or more, about 7 µm or more, about 9 µm or more, about 11 µm or more, about 13 µm or more, about 15 µm or more, about 17 µm or more, or about 19 µm or more, or may also be about 90 µm or less, 80 µm or less, 70 µm or less, 60 µm or less, 50 µm or less, 40 µm or less, 30 µm or less, or 20 µm or less or so.

Here, the ratio (D90/D10) of the 90% volume cumulative particle diameter (D90) of the electrode active material to the 10% volume cumulative particle diameter (D10) may be 15 or less. In another example, the ratio D90/D10 may be 14 or less, 13 or less, 12 or less, 11 or less, 10 or less, 9 or less, 8 or less, 7 or less, 6 or less, 5 or less, 4 or less, or 3 or less or so, or may be more than 1, 1.5 or more, 2 or more, 2.5 or more, 3 or more, or 3.5 or more or so.

Here, the 90% volume cumulative particle diameter (D90) of the electrode active material may be in a range of 5 µm to 500 µm. In another example, the particle diameter (D90) may be about 7 µm or more, about 9 µm or more, about 11 µm or more, about 13 µm or more, about 15 µm or more, about 17 µm or more, about 19 µm or more, about 20 µm or more, about 21 µm or more, about 22 µm or more, about 23 µm or more, about 24 µm or more, or about 25 µm or more, or may also be about 450 µm or less, about 400 µm or less, about 350 µm or less, about 300 µm or less, about 250 µm or less, about 200 µm or less, about 150 µm or less, about 100 µm or less, about 90 µm or less, 80 µm or less, 70 µm or less, 60 µm or less, 50 µm or less, 40 µm or less, 30 µm or less, or 20 µm or less or so.

The respective average particle diameters D1 and D2 and cumulative volume particle diameters D10 and D90 are particle diameters of the respective materials in the slurry applied for preparing the active material layer. Therefore, when the electrode is manufactured through a rolling process, there may be a slight difference from the particle diameters D1, D2, D10, and D90 of the respective components identified in the active material layer.

In this specification, the particle diameters D1, D2, D10, and D90 of the particulate matter are particle diameters obtained by a laser diffraction method, and the method of obtaining these particle diameters is described in Examples. In addition, for example, when the active material layer is a rolled layer, the particle diameters mentioned herein for the particulate binder and particulate active material in the active material layer are average particle diameters before rolling, unless otherwise specified.

In one example, when two types of particulate binders (or electrode active materials) having different particle diameters D1, D2, D10, and D90 are present in the active material layer, the particle diameters D1, D2, D10, and D90 in consideration of the weight fractions of the two types of particulate binders (or electrode active materials) may be defined as the particle diameters D1, D2, D10, and D90 of the particulate binder (or electrode active material) herein.

For example, in the case of the average particle diameter, when the particulate binder (or electrode active material) having an average particle diameter of Da is present by the weight of W1, and the particulate binder (or electrode active material) having an average particle diameter of Db is present by the weight of W2, the average particle diameter D may be defined as D=(Da×W1+Db×W2)/(W1+W2), which is the same for the particle diameters D10 and D90. In addition, at the time of the confirmation, the particle diameters Da and Db and the weights W1 and W2 are each values of the same unit from each other.

The reason is not clear, but it is expected that the dispersion state of the binder capable of achieving the desired position of the binder is achieved in the slurry during the electrode manufacturing process by such particle size characteristics, and the migration phenomenon of the binder is also appropriately controlled.

In addition, it is also possible to prevent problems such as cycle expansion while at most securing the output and capacity characteristics of the electrode active material by the particle size characteristics as above.

For proper binder distributions, it may be advantageous to use a binder having a solubility parameter in a range to be described below as the binder.

In the present application, it is possible to secure a high level of adhesion force while taking a relatively small amount of the binder in the active material layer. For example, the content of the binder in the active material layer may be about 0.5 to 10 weight% or so. In another example, the ratio may also be further controlled in the range of 1 weight% or more, 1.5 weight% or more, 2 weight% or more, 2.5 weight% or more, 3 weight% or more, 3.5 weight% or more, or 4 weight% or more or so and/or in the range of 9.5 weight% or less, 9 weight% or less, 8.5 weight% or less, 8 weight% or less, 7.5 weight% or less, 7 weight% or less, 6.5 weight% or less, 6 weight% or less, 5.5 weight% or less, 5 weight% or less, or 4.5 weight% or less or so.

The electrode active material included in the active material layer may be a positive active material or a negative active material, and the specific type is not particularly limited. For example, as the positive electrode active material, active materials including LiCoO₂, LiNiO₂, LiMn₂O₄, LiCoPO₄, LiFePO₄, LiNiMnCoO₂ and LiNi_{1-x-y-z}CoₓM1_{y}M2_{z}O₂ (M1 and M2 are each independently any one selected from the group consisting of Al, Ni, Co, Fe, Mn, V, Cr, Ti, W, Ta, Mg, and Mo, and x, y and z are each independently an atomic fraction of oxide composition elements, satisfying 0 ≤ x < 0.5, 0 ≤ y < 0.5, 0 ≤ z <0.5, 0 < x+y+z ≤ 1), and the like may be used, and as the negative active material, active materials including natural graphite, artificial graphite, carbonaceous materials; lithium-containing titanium composite oxides (LTO), Si, Sn, Li, Zn, Mg, Cd, Ce, Ni or Fe metals (Me); alloys composed of the metals (Me); oxides (MeOx) of the metals (Me); and composites of the metals (Me) with carbon, and the like may be used.

In the present application, it is possible to secure excellent adhesion force while maintaining a relatively high ratio of the active material in the active material layer.

For example, the active material in the active material layer may be in the range of 1000 to 10000 parts by weight relative to 100 parts by weight of the binder. In another example, the ratio may be 1500 parts by weight or more, 2000 parts by weight or more, 2500 parts by weight or more, 3000 parts by weight or more, 3500 parts by weight or more, 4000 parts by weight or more, or 4500 parts by weight or more, or may also be 9500 parts by weight or less, 9000 parts by weight or less, 8500 parts by weight or less, 8000 parts by weight or less, 7500 parts by weight or less, 7000 parts by weight or less, 6500 parts by weight or less, 6000 parts by weight or less, 5500 parts by weight or less, 5000 parts by weight or less, 4500 parts by weight or less, 4000 parts by weight or less, 3500 parts by weight or less, 3000 parts by weight or less, or about 2500 parts by weight or less or so.

The active material layer may also further comprise other necessary components in addition to the above components. For example, the active material layer may further comprise a conductive material. As the conductive material, for example, a known component may be used without any particular limitation, as long as it exhibits conductivity without causing chemical changes in the current collector and the electrode active material. For example, as the conductive material, one or a mixture of two or more selected from graphite such as natural graphite or artificial graphite; carbon black such as carbon black, acetylene black, ketchen black, channel black, furnace black, lamp black, or summer black; a conductive fiber such carbon fiber or metal fiber; a carbon fluoride powder; a metal powder such as an aluminum powder, or a nickel powder; a conductive whisker such as zinc oxide or potassium titanate; a conductive metal oxide such as titanium oxide; a polyphenylene derivative, and the like may be used.

The content of the conductive material is controlled as necessary, without being particularly limited, but it may be usually included in an appropriate ratio within the range of 0.1 to 20 parts by weight or 0.3 to 12 parts by weight relative to 100 parts by weight of the active material. A method of determining the content of the conductive material to an appropriate level in consideration of the cycle life of the battery, and the like is known.

The active material layer may also comprise other necessary known components (e.g., thickeners such as carboxymethyl cellulose (CMC), starch, hydroxypropyl cellulose or regenerated cellulose, etc.) in addition to the above components.

The thickness of the active material layer is not particularly limited, which may be controlled to have an appropriate level of thickness in consideration of desired performance.

For example, the thickness of the active material layer may be in a range of about 10 µm to 500 µm. In another example, the thickness may be about 30 µm or more, 50 µm or more, 70 µm or more, 90 µm or more, or 100 µm or more or so, or may also be about 450 µm or less, 400 µm or less, 350 µm or less, 300 µm or less, 250 µm or less, 200 µm or less, or 150 µm or less or so.

The active material layer may be formed to have a certain level of porosity. The porosity is usually controlled by rolling during the manufacturing process of the electrode. The active material layer may have a porosity of about 35% or less or so. The porosity may also be further adjusted in the range of 33% or less, 31% or less, 29% or less, or 27% or less and/or in the range of 5% or more, 7% or more, 9% or more, 11% or more, 13% or more, 15% or more, 17% or more, 19% or more, 21% or more, 23% or more, or 25% or more. The rolling process controlled to have the porosity may contribute to the formation of the desired binder distribution in the present application, as described below. Here, the porosity is a value calculated by a method of comparing the ratio of the difference between the real density of the active material layer and the density after rolling, and a method of calculating the porosity of the active material layer in this way is known.

The present application also relates to a method for manufacturing an electrode. The above-described electrode may be manufactured in the manner to be described below. In general, the electrode is manufactured by coating the slurry on the current collector, drying it, and then performing a rolling process.

Therefore, the method for manufacturing an electrode may comprise a step of forming a layer of slurry on the current collector.

In the present application, by controlling the compositions of the slurry, the surface characteristics of the current collector on which the slurry is coated, drying conditions and/or rolling conditions in the above process, it is possible to form the desired binder distribution.

For example, in the manufacturing process of the present application, as a slurry, one that a relatively hydrophobic binder (suitably a particulate binder having a specific average particle diameter while having relative hydrophobicity) is dispersed in a certain amount in a relatively polar solvent may be applied. Such a slurry is coated on a current collector whose surface characteristics are controlled, as described below. The reason is not clear, but when such a slurry is coated on the current collector, it is expected that the dispersion state of the binder in the slurry, the affinity of the solvent of the slurry with the current collector surface, the affinity of the current collector surface with the binder in the slurry and/or the particle diameter relationship therebetween in the case where the particulate material is applied, and the like are mutually combined with each other to control the position of the binder of the desired shape.

For example, the affinity of the solvent with the current collector surface affects the contact angle of the solvent on the current collector surface, where the contact angle may form a force in a certain direction in the slurry due to capillary action or the like upon evaporation of the solvent. The affinity of the binder with the solvent and the amount of the binder (also, the particle diameter in the case of the particulate binder) affect the dispersion state of the binder in the slurry, and the affinity of the binder with the current collector surface affects the dispersion state of the binder in the slurry, or the binder distribution shape into the current collector surface, and the like.

In the present application, it has been confirmed that the desired binder arrangement is achieved through the dispersion state of the binder and the evaporation aspect of the solvent when the slurry of the compositions to be described below has been formed on the current collector having the surface characteristics to be described below, and the shear force in the slurry generated thereby.

For example, the slurry applied to the manufacturing process may comprise a solvent. As the solvent, one capable of properly dispersing the slurry components such as the electrode active material is usually applied, and an example thereof is exemplified by water, methanol, ethanol, isopropyl alcohol, acetone, dimethyl sulfoxide, formamide and/or dimethylformamide, and the like.

In the present application, it may be necessary to use a solvent having a dipole moment of approximately 1.3D or more in the solvents. In another example, the dipole moment of the solvent may be further controlled in the range of about 1.35 D or more, 1.4 D or more, 1.45 D or more, 1.5 D or more, 1.55 D or more, 1.6 D or more, 1.65 D or more, 1.7 D or more, 1.75 D or more, 1.8 D or more, or 1.85 D or more or so and/or in the range of 5 D or less, 4.5 D or less, 4 D or less, 3.5 D or less, 3 D or less, 2.5 D or less, 2 D or less, or 1.9 D or less or so. The dipole moments of solvents are known for each solvent.

As the binder included in the slurry, an appropriate one of the above-described types of binders may be selected and used. In order to achieve the desired dispersion state in the solvent, it may be necessary to use a binder having a solubility parameter of about 10 to 30 MPa^{1/2} or so as the binder. In another example, the solubility parameter may be 11 MPa^{1/2} or more, 12 MPa^{1/2} or more, 13 MPa^{1/2} or more, 14 MPa^{1/2} or more, 15 MPa^{1/2} or more, or 16 MPa^{1/2} or more, or may be 28 MPa^{1/2} or less, 26 MPa^{1/2} or less, 24 MPa^{1/2} or less, 22 MPa^{1/2} or less, 20 MPa^{1/2} or less, or 18 MPa^{1/2} or less. The solubility parameter of such a binder may be confirmed through a literature (e.g., Yanlong Luo et al., 2017, etc.). For example, in the above-mentioned types of binders, a type having such a solubility parameter may be selected.

A particulate binder may be used as the binder, and for example, the use of the particulate binder having an average particle diameter in the above-mentioned average diameter.

The content of the binder in the slurry may be controlled in consideration of the desired dispersion state. For example, the binder may be included in the slurry so that the concentration of the binder relative to the solvent (=100×B/(B+S), where B is the weight (g) of the binder in the slurry, and S is the weight (g) of the solvent in the slurry.) is about 0.1 to 10% or so. In another example, the concentration may be 0.5% or more, 1% or more, 1.5% or more, 2% or more, 2.5% or more, 3% or more, or 3.5% or more, or may also be 9% or less, 8% or less, 7% or less, 6% or less, 5% or less, 4% or less, 3% or less, or 2.5% or less or so.

The slurry may comprise the electrode active material in addition to the above components. As the electrode active material, an appropriate type may be selected from the above-described types, and in consideration of the contribution to the desired dispersion state, an electrode active material in the form of particles, which has an average particle diameter (D50 particle diameter) in the above-described range, and D10 and D90 particle diameter relationships, and has a ratio with the average particle diameter of the binder in the above range, may be used.

The ratio of the electrode active material in the slurry may be adjusted so that the ratio of the electrode active material in the active material layer may be achieved.

In addition to the above components, the slurry may also comprise other components including the above-described conductive material, thickener, and the like, depending on the purpose.

The method for manufacturing an electrode of the present application may comprise, for example, a step of forming a layer of slurry on a current collector. The slurry may be applied on the surface of the current collector. In this process, the coating method is not particularly limited, and a known coating method, for example, a method such as spin coating, comma coating, or bar coating may be applied.

The surface characteristics of the current collector to which the slurry is applied may be controlled.

For example, the surface of the current collector to which the slurry is applied may have a water contact angle of 50 degrees or more. In another example, the water contact angle may be further controlled in the range of 100 degrees or less, 95 degrees or less, 90 degrees or less, 85 degrees or less, 80 degrees or less, or 75 degrees or less or so and/or in the range of 55 degrees or more, 60 degrees or more, 65 degrees or more, 70 degrees or or more, 75 degrees or more, 85 degrees or more, or 90 degrees or more or so.

For example, the surface of the current collector to which the slurry is applied may have a DM (diiodomethane) contact angle of 30 degrees or more. In another example, the DM contact angle may be further controlled in the range of 70 degrees or less, 65 degrees or less, 60 degrees or less, 55 degrees or less, 50 degrees or less, or 45 degrees or less or so and/or in the range of 35 degrees or more, 40 degrees or more, 45 degrees or more, 50 degrees or more, 55 degrees or more, or 60 degrees or more or so.

For example, the surface of the current collector to which the slurry is applied may have a surface energy of 65 mN/m or less. The surface energy may be 60 mN/m or less, 55 mN/m or less, 50 mN/m or less, 45 mN/m or less, 40 mN/m or less, 35 mN/m or less, or 30 mN/m or less or so, or may also be 25 mN/m or more, 27 mN/m or more, or 29 mN/m or more or so.

For example, the surface of the current collector to which the slurry is applied may have a dispersion energy of less than 45 mN/m. In another example, the dispersion energy may be 40 mN/m or less, 35 mN/m or less, or 30 mN/m or less or so, or may also be about 23 mN/m or more, 25 mN/m or more, or 27 mN/m or more or so.

For example, the surface of the current collector to which the slurry is applied may have a polar energy of 20 mN/m or less. In another example, the dispersion energy may be 18 mN/m or less, 16 mN/m or less, 14 mN/m or less, 12 mN/m or less, 10 mN/m or less, 8 mN/m or less, 6 mN/m or less, 4 mN/m or less, 2 mN/m or less, or 1.5 mN/m or less, or may also be 0.5 mN/m or more, 1 mN/m or more, 1.5 mN/m or more, 2 mN/m or more, 2.5 mN/m or more, 3 mN /m or more, 3.5 mN/m or more, 4 mN/m or more, 4.5 mN/m or more, 5 mN/m or more, 5.5 mN/m or more, 6 mN/m or more, 6.5 mN/m or more, or 7mN/m or more or so.

Here, the surface energy, the dispersion energy, and the polar energy are physical quantities that can be obtained by the OWRK (Owens-Wendt-Rabel-Kaelble) method based on the water contact angle and the DM contact angle.

A desired active material layer may be obtained by applying the above-mentioned slurry to the current collector surface satisfying at least one, two or more, or all of surface characteristics as described above.

Among the above-described current collectors, a current collector exhibiting the water contact angle and the like may be selected, but there are cases where the current collector does not normally satisfy the above-described characteristics, so that surface treatment may also be performed in order to satisfy the desired surface characteristics.

For example, the above-described silicon-containing layer may be formed on the current collector surface.

Regarding the silicon-containing layer (intermediate layer), for example, a step of coating a coating solution comprising a silicon compound on the current collector surface may be included. As for the content of the silicon-containing layer, the above-described contents may be applied in the same manner. The coating method is not particularly limited, and for example, a method such as spin coating, comma coating, or bar coating may be applied.

The solvent may be, for example, ethanol or the like, and it is not particularly limited, if the silicon compound can be appropriately dispersed.

The silicon compound may be included in the solvent, for example, in a range of 0.1 weight% to 10 weight%. In another example, the compound of Formula 1 may be included, with respect to the solvent, in an amount of 0.2 weight% or more, 0.3 weight% or more, 0.4 weight% or more, 0.5 weight% or more, 0.6 weight% or more, 0.7 weight% or more, 0.8 weight% or more, or 0.9 weight% or more, or may be included in an amount of 9 weight% or less, 8 weight% or less, 7 weight% or less, 6 weight% or less, 5 weight% or less, 4 weight% or less, 3 weight% or less, or 2 weight% or less.

The step of forming an intermediate layer may comprise, for example, a drying step twice or more.

The step of forming an intermediate layer may comprise a primary drying step. For example, the primary drying process may be performed at a temperature within the range of 40°C to 250°C. In another example, the primary drying process may be performed at a temperature of 45°C or more, 50°C or more, 55°C or more, 60°C or more, 65°C or more, 70°C or more, 75°C or more, 80°C or more, 85°C or more, 90°C or more, or 95°C or more, or may be performed at a temperature of 240°C or less, 230°C or less, 220°C or less, 210°C or less, 200°C or less, 190°C or less, 180°C or less, 170°C or less, 160°C or less, 150°C or less, 140°C or less, 130°C or less, 120°C or less, or 110°C or less. In addition, the primary drying process may be performed for a time in the range of, for example, 1 minute to 15 minutes. In another example, the annealing may be performed for 2 minutes or more, 3 minutes or more, or 4 minutes or more, or may be performed for 14 minutes or less, 13 minutes or less, 12 minutes or less, 11 minutes or less, 10 minutes or less, 9 minutes or less, 8 minutes or less, 7 minutes or less, or 6 minutes or less.

The drying step may comprise, for example, a secondary drying step. The secondary drying step may be performed, for example, at the same temperature and/or time as that of the primary drying step.

A washing process may be further included between the primary drying step and the secondary drying step. The washing process may be performed using, for example, a solvent such as ethanol.

The present application may relate to a method for manufacturing an electrode comprising a step of forming a layer of slurry on a current collector. The step of forming a layer of slurry may be performed according to the above-described coating method.

After applying the slurry, for example, a drying process of the slurry may be performed. Conditions under which the drying process is performed are not particularly limited, but it may be appropriate to adjust the drying temperature within the range of about 150°C to 400°C in consideration of the desired position of the binder and the like. In another example, the drying temperature may be about 170°C or more, 190°C or more, 210°C or more, or 225°C or more or so, or may also be 380°C or less, 360°C or less, 340°C or less, 320°C or less, 300°C or less, 280°C or less, 260°C or less, or 240°C or less or so.

The drying time may also be controlled in consideration of the dispersion state considering the desired position of the binder and the like, and for example, it may be adjusted within the range of about 10 seconds to 200 seconds. In another example, the time may also be further controlled within the range of 20 seconds or more, 30 seconds or more, 40 seconds or more, 50 seconds or more, 60 seconds or more, 70 seconds or more, 80 seconds or more, or 85 seconds or more and/or within the range of 190 seconds or less, 180 seconds or less, 170 seconds or less, 160 seconds or less, 150 seconds or less, 140 seconds or less, 130 seconds or less, 120 seconds or less, 110 seconds or less, 100 seconds or less, or 95 seconds or less.

Following the drying process, a rolling process may be performed. In this case, the position of the binder and the like may be adjusted even by the rolling conditions (e.g., pressure during rolling, etc.).

For example, the rolling may be performed so that the porosity of the rolled slurry (active material layer) is about 35% or less or so. The desired binder distribution may be effectively formed by a pressure or the like applied upon rolling performed to have such a porosity. In another example, the porosity may also be further controlled in the range of 33% or less, 31% or less, 29% or less, or 27% or less and/or in the range of 5% or more, 7% or more, 9% or more, 11% or more, 13% or more, 15% or more, 17% or more, 19% or more, 21% or more, 23% or more, or 25% or more.

The thickness of the rolled slurry (i.e., the active material layer) is within the thickness range of the active material layer as described above.

During the manufacturing process of the electrode of the present application, necessary additional processes (e.g., cutting process, etc.) may also be performed in addition to the slurry coating, drying, and rolling.

The present application also relates to an electrochemical element comprising such an electrode, for example, a secondary battery.

The electrochemical element may comprise the electrode as a positive electrode and/or a negative electrode. As long as the electrode of the present application is used as the negative electrode and/or the positive electrode, other configurations or manufacturing methods of the electrochemical element are not particularly limited, and a known method may be applied.

### Advantageous Effects

The present application relates to an electrode comprising a current collector and an active material layer, which can provide an electrode capable of securing a high level of interparticle adhesion force and adhesion force between the active material layer and the current collector relative to the binder content in the active material layer.

### Description of Drawings

Figure 1 is a cross-sectional diagram of an exemplary electrode of the present application.
Figure 2 is a conceptual diagram of a formation state of an active material layer in the prior art.
Figure 3 is a conceptual diagram of a state where a standard peel test is performed.
Figures 4 to 9 are FE-SEM images of the current collector surfaces of Examples 1 to 6, respectively.
Figures 10 and 11 are FE-SEM images of the current collector surfaces of Comparative Examples 1 and 2, respectively.

### [Explanation of reference numerals]

100: current collector
200: active material layer
300: Scotch Magic Tape
1001: electrode active material
2001: binder

### Mode for Invention

Hereinafter, the present application will be described in more detail through Examples and Comparative Examples, but the scope of the present application is not limited to the following Examples.

### 1. Measurement of contact angle and surface energy

The contact angle and surface energy were measured using a drop shape analyzer device of KRUSS (manufacturer: KRUSS, trade name: DSA100). 3 µL of water or DM (diiodomethane) drops were dropped at a rate of about 3µl/sec, respectively, and the respective contact angles were measured by a tangent angle measurement method. The surface energy, dispersion energy, and polar energy were calculated, respectively, by an OWRK (Owens-Wendt-Rabel-Kaelble) method through the contact angles of the water and DM.

### 2. Standard peel test

The standard peel test was performed using 3M's Scotch Magic Tape Cat. 810R. The electrodes prepared in Examples or Comparative Examples were each cut to a size of 20mm or so in width and 100mm or so in length to obtain a sample. On the active material layer of the obtained sample, the Scotch Magic Tape Cat. 810R was attached by reciprocating and pushing a roller having a weight of 1kg, a radius of 50mm, and a width of 40mm once. At this time, the Scotch Magic Tape was cut to have a width of 10mm or so and a length of 60mm or so, and used, and as shown in Figure 3, the Scotch Magic Tape and the electrode active material layer were attached to be crossed to a length of about 20mm or so, and the protruding part was held and peeled off. At this time, the peel rate and the peel angle were set to a speed of about 20mm/sec or so and an angle of about 30 degrees or so. A new scotch tape was replaced and used every time it was peeled off. The above process was repeated until the components of the active material layer did not come out on the surface of the Scotch Magic Tape. It was visually observed whether or not the components of the active material layer came out, and when the tone did not substantially change compared to the unused tape, it was determined that the components of the active material layer did not come out.

### 3. Area confirmation of occupied region of binder

After the standard peel test, the occupied area of the binder was confirmed from the current collector surface. After the standard peel test, the surface of the current collector was photographed at a magnification of 500 times with an FE-SEM (Field Emission Scanning Electron Microscope) device (manufacturer: HITACHI, trade name: S4800) to obtain an image. Regions where the surface of the current collector was not observed due to the presence of the binder and regions where the surface of the current collector was observed were divided using the Trainable Weka Segmentation Plug-in of Image J software (manufacturer: Image J), and the occupied area of the binder was measured based on these regions. In the above process, based on the brightness, the parts where the brightness was 80 or less, and the parts where the brightness was 160 or more due to the height within the closed curve consisting of the relevant parts were defined as the parts occupied by the binder, and the other regions were designated as the regions where there was no binder.

### 4. Height confirmation of occupied region of binder

After the standard peel test, the surface of the current collector was observed with a confocal laser spectro microscope (manufacturer: Keyenece, product name: VK-X200), and 5 or more images were obtained at a magnification of 3000 times, and the heights of the occupied regions of the binder were measured at 3 or more sites for each image and a total of 20 or more sites, whereby the arithmetic average thereof was designated as the height of the occupied regions of the binder.

### 5. Confirmation of particle diameters (D10, D50 and D90 particle diameters) of particulate binder and electrode active material

The average particle diameters (D50 particle diameters) of the particulate binder and the electrode active material were measured with Marvern's MASTERSIZER3000 equipment in accordance with ISO-13320 standard. Upon the measurement, water was used as a solvent. When a material to be measured (particulate binder or electrode active material) is dispersed in the solvent and irradiated with lasers, the lasers are scattered by the binder dispersed in the solvent, and the intensities and directionality values of the scattered lasers vary depending on the size of the particles, so that it is possible to obtain the average particle diameter by analyzing these with the Mie theory. Through the above analysis, a volume-based cumulative graph of the particle size distribution was obtained through conversion to the particle diameters of spheres having the same volume as that of the dispersed binder, and the particle diameter (median particle diameter) at 50% cumulative of the graph was designated as the average particle diameter (D50 particle diameter).

In addition, the particle diameter at 90% cumulative of the volume-based cumulative graph was designated as the 90% volume cumulative particle diameter (D90), and the particle diameter at 10% cumulative was designated as the 10% volume cumulative particle diameter (D10).

### 6. Measurement of adhesion force

After rolling, the electrode was cut to have a width of 20mm or so, and the adhesion force was measured according to a known method for measuring the adhesion force of the active material layer. Upon measuring the adhesion force, the peel angle was 90 degrees, and the peel rate was 5 mm/sec or so. After the measurement, the portions where the peaks were stabilized were averaged and defined as the adhesion force.

### Example 1.

A copper foil (Cu foil) was used as a current collector, and after adjusting the surface characteristics in the following manner, it was applied to the manufacture of the electrode.

First, a coating liquid in which ethyl trimethoxy silane was dispersed in ethanol as a solvent at a concentration of 1 weight% or so was coated on the surface of the copper foil to a thickness of about 10 µm or so using a bar coater. After coating, it was annealed at 100°C for 5 minutes or so, washed with ethanol, and then dried again at 100°C for 5 minutes or so to form a silane coating layer. The surface energy of the silane coating layer was about 29.7 mN/m or so (dispersion energy was about 28.3 mN/m, and polar energy was about 1.4 mN/m). In addition, the water contact angle was about 95 degrees, and the DM contact angle was about 60.4 degrees or so.

The slurry was prepared by mixing water, an SBR (Styrene-Butadiene rubber) binder, a thickener (CMC, carboxymethyl cellulose), an electrode active material (1) (artificial graphite (GT), average particle diameter (D50 particle diameter): 20 µm), and an electrode active material (2) (natural graphite (PAS), average particle diameter (D50 particle diameter): 15 µm) in a weight ratio of 51:2:0.6:37.1:9.3 (water: SBR: CMC: active material (1): active material (2)). Here, the average particle diameter (D50 particle diameter) of the electrode active material (1) (GT) was about 20 µm or so, the D10 particle diameter was about 8 µm or so, and the D90 particle diameter was about 28 µm or so. In addition, here, the average particle diameter (D50 particle diameter) of the electrode active material 2 (PAS) was about 15 µm or so, the D10 particle diameter was about 6 µm or so, and the D90 particle diameter was about 25 µm or so.

Here, water is a solvent having a dipole moment of about 1.84 D or so, and the SBR binder is a binder having a solubility parameter of about 16.9 MPa^{1/2} or so. The solubility parameter of the SBR binder is the value described in Yanlong Luo et al., 2017. In addition, the SBR binder was a particulate binder, which had an average particle diameter (D50 particle diameter, median particle diameter) of about 150 nm or so.

The slurry was applied to a thickness of about 280 µm or so on the surface of the silane coating layer by a gap coating method, and dried at a temperature of about 230°C for about 90 seconds. After drying, a slurry layer having a thickness of 180 µm or so was obtained, and the dried slurry layer was rolled with a conventional electrode rolling mill to have a final thickness of about 100 µm or so and a porosity of about 24% or so, thereby forming an active material layer.

The porosity of the active material layer is a value calculated by a method of comparing the ratio of the difference between the real density and the density after rolling. In addition, when considering the compositions of the slurry, the content of the SBR binder in the active material layer of the electrode is 4 weight% or so, and the content of the electrode active material (GT+PAS) is about 95 weight% or so.

### Example 2.

A copper foil (Cu foil) was used as a current collector, and after adjusting the surface characteristics in the following manner, it was applied to the manufacture of the electrode.

A coating liquid in which allyl trimethoxy silane was dispersed in ethanol as a solvent at a concentration of 1 weight% or so was coated on the surface of the copper foil to a thickness of about 10 µm or so using a bar coater. After coating, it was annealed at 100°C for 5 minutes or so, washed with ethanol, and then dried again at 100°C for 5 minutes or so to form a silane coating layer. The surface energy of the silane coating layer was about 30.6 mN/m or so (dispersion energy was about 29.5 mN/m, and polar energy was about 1.1 mN/m). In addition, the water contact angle was about 95.8 degrees, and the DM contact angle was about 58.4 degrees or so.

Subsequently, the same slurry as used in Example 1 was applied to a thickness of about 280 µm or so on the surface of the silane coating layer by a gap coating method, and dried at a temperature of about 230°C for about 90 seconds. After drying, a slurry layer having a thickness of 180 µm or so was obtained, and the dried slurry layer was rolled with a conventional electrode rolling mill to have a final thickness of about 100 µm or so and a porosity of about 24% or so, thereby forming an active material layer.

The method of calculating the porosity of the active material layer and the contents of the SBR binder and the electrode active material in the active material layer of the electrode are the same as in Example 1.

### Example 3.

A copper foil (Cu foil) was used as a current collector, and after adjusting the surface characteristics in the following manner, it was applied to the manufacture of the electrode.

A coating liquid in which 3-aminopropyl trimethoxy silane was dispersed in ethanol as a solvent at a concentration of 1 weight% or so was coated on the surface of the copper foil to a thickness of about 10 µm or so using a bar coater. After coating, it was annealed at 100°C for 5 minutes or so, washed with ethanol, and then dried again at 100°C for 5 minutes or so to form a silane coating layer. The surface energy of the silane coating layer was about 28.3 mN/m or so (dispersion energy was about 27.1 mN/m, and polar energy was about 1.2 mN/m). In addition, the water contact angle was about 96.8 degrees, and the DM contact angle was about 62.6 degrees or so.

Subsequently, the same slurry as used in Example 1 was applied to a thickness of about 280 µm or so on the surface of the silane coating layer by a gap coating method, and dried at a temperature of about 230°C for about 90 seconds. After drying, a slurry layer having a thickness of 180 µm or so was obtained, and the dried slurry layer was rolled with a conventional electrode rolling mill to have a final thickness of about 110 µm or so and a porosity of about 26% or so, thereby forming an active material layer.

The method of calculating the porosity of the active material layer and the contents of the SBR binder and the electrode active material in the active material layer of the electrode are the same as in Example 1.

### Example 4.

A copper foil whose surface characteristics were controlled in the same manner as in Example 1 was used as a current collector.

The slurry was prepared by mixing water, an SBR (Styrene-Butadiene rubber) binder, a thickener (CMC, carboxymethyl cellulose), an electrode active material (1) (artificial graphite (GT), average particle diameter (D50 particle diameter): 20 µm), and an electrode active material (2) (natural graphite (PAS), average particle diameter (D50 particle diameter): 15 µm) in a weight ratio of 48.5: 1:0.5:45:5 (water: SBR: CMC: active material (1): active material (2)). Here, water is a solvent having a dipole moment of about 1.84 D or so, and the SBR binder is a binder having a solubility parameter of about 16.9 MPa^{1/2} or so. The solubility parameter of the SBR binder is the value described in Yanlong Luo et al., 2017. In addition, the SBR binder was a particulate binder, which had an average particle diameter (D50 particle diameter, median particle diameter) of about 150 nm or so.

The slurry was applied to a thickness of about 280 µm or so on the surface of the silane coating layer by a gap coating method, and dried at a temperature of about 230°C for about 90 seconds. After drying, a slurry layer having a thickness of 180 µm or so was obtained, and the dried slurry layer was rolled with a conventional electrode rolling mill to have a final thickness of about 110 µm or so and a porosity of about 26% or so, thereby forming an active material layer.

A method of calculating the porosity of the active material layer is the same as in Example 1. In addition, when considering the compositions of the slurry, the content of the SBR binder in the active material layer of the electrode is 2 weight% or so, and the content of the electrode active material is about 97 weight% or so.

### Example 5.

A copper foil whose surface characteristics were controlled in the same manner as in Example 2 was used as a current collector.

Subsequently, the same slurry as used in Example 4 was applied to a thickness of about 280 µm or so on the surface of the silane coating layer by a gap coating method, and dried at a temperature of about 230°C for about 90 seconds. After drying, a slurry layer having a thickness of 180 µm or so was obtained, and the dried slurry layer was rolled with a conventional electrode rolling mill to have a final thickness of about 110 µm or so and a porosity of about 26% or so, thereby forming an active material layer.

The method of calculating the porosity of the active material layer and the contents of the SBR binder and the electrode active material in the active material layer of the electrode are the same as in Example 4.

### Example 6.

A copper foil whose surface characteristics were controlled in the same manner as in Example 3 was used as a current collector.

Subsequently, the same slurry as used in Example 4 was applied to a thickness of about 280 µm or so on the surface of the silane coating layer by a gap coating method, and dried at a temperature of about 230°C for about 90 seconds. After drying, a slurry layer having a thickness of 180 µm or so was obtained, and the dried slurry layer was rolled with a conventional electrode rolling mill to have a final thickness of about 110 µm or so and a porosity of about 26% or so, thereby forming an active material layer.

The method of calculating the porosity of the active material layer and the contents of the SBR binder and the electrode active material in the active material layer of the electrode are the same as in Example 4.

### Comparative Example 1.

A copper foil (Cu foil) as a current collector was directly applied to the electrode manufacturing without a separate treatment thereon. The surface energy of the untreated copper foil surface was about 71.2 mN/m or so (dispersion energy was about 45 mN/m, and polar energy was about 26.2 mN/m or so).

Subsequently, the same slurry as used in Example 1 was applied to a thickness of about 280 µm or so on the surface of the copper foil layer by a gap coating method, and dried at a temperature of about 230°C for about 90 seconds. After drying, a slurry layer having a thickness of 180 µm or so was obtained, and the dried slurry layer was rolled with a conventional electrode rolling mill to have a final thickness of about 110 µm or so and a porosity of about 26% or so, thereby forming an active material layer.

The method of calculating the porosity of the active material layer and the contents of the SBR binder and the electrode active material in the active material layer of the electrode are the same as in Example 1.

### Comparative Example 2.

A copper foil (Cu foil) as a current collector was directly applied to the electrode manufacturing without a separate treatment thereon. The surface energy of the untreated copper foil surface was about 71.2 mN/m or so, the dispersion energy was about 45 mN/m, and the polar energy was about 26.2 mN/m or so.

Subsequently, the same slurry as used in Example 4 was applied to a thickness of about 280 µm or so on the surface of the copper foil layer by a gap coating method, and dried at a temperature of about 230°C for about 90 seconds. After drying, a slurry layer having a thickness of 180 µm or so was obtained, and the dried slurry layer was rolled with a conventional electrode rolling mill to have a final thickness of about 110 µm or so and a porosity of about 26% or so, thereby forming an active material layer.

The method of calculating the porosity of the active material layer and the contents of the SBR binder and the electrode active material in the active material layer of the electrode are the same as in Example 4.

### Test Example 1. Confirmation of area and height of binder occupied region

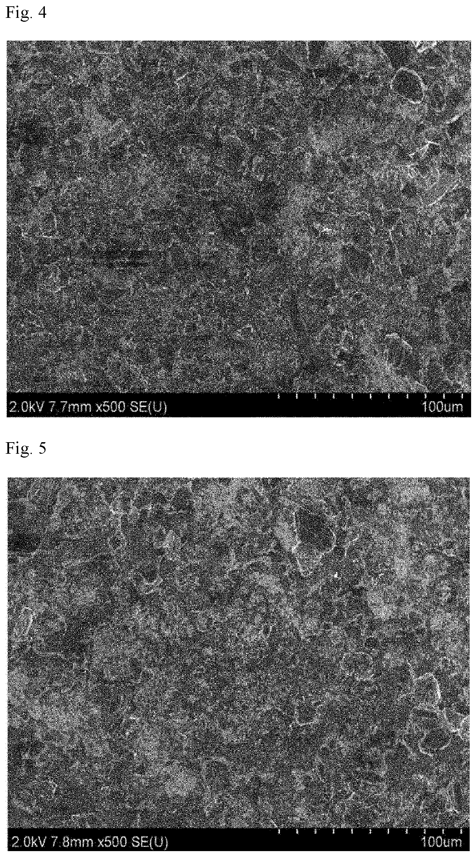

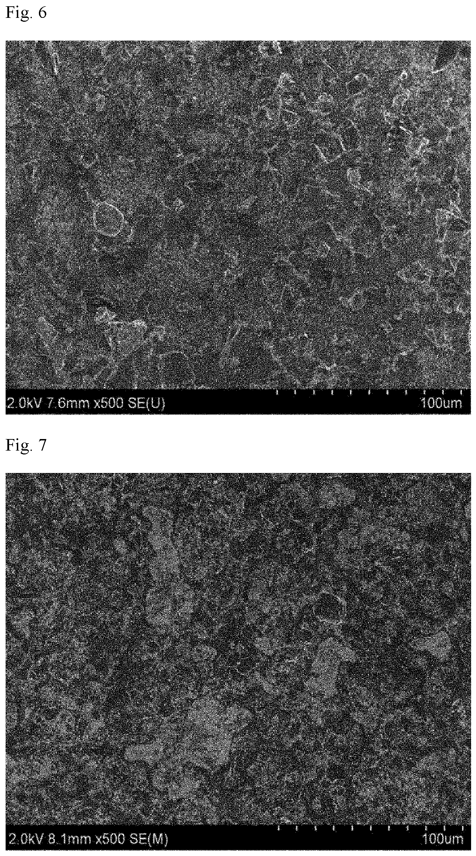

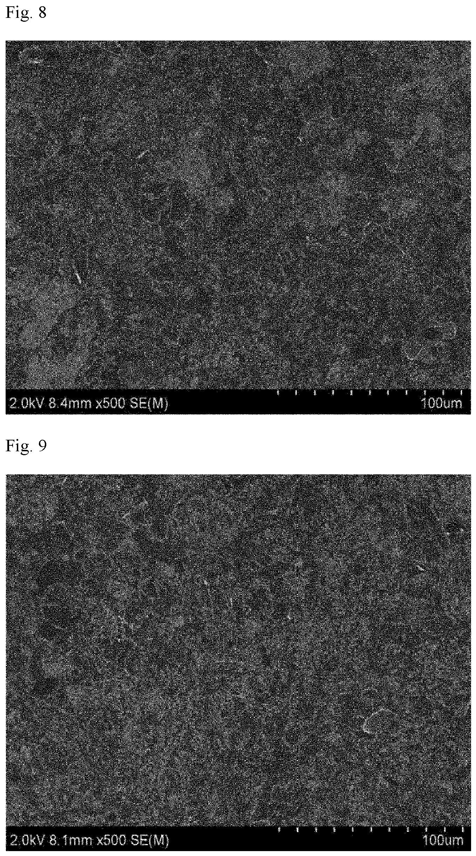

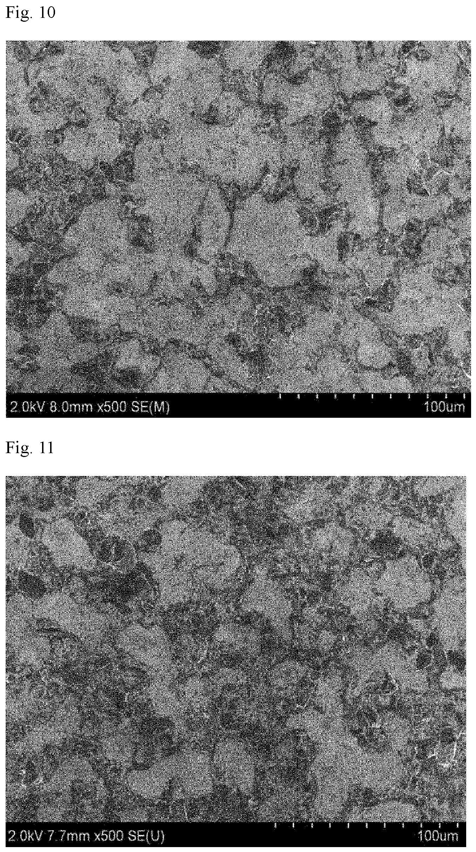

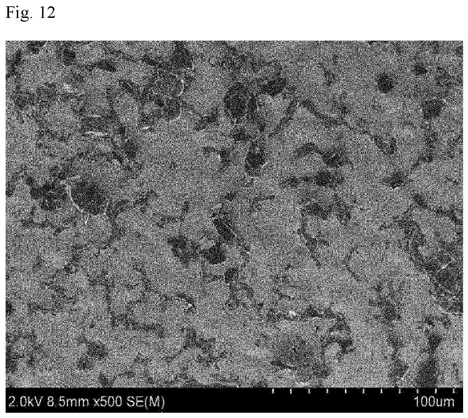

The electrodes of Examples and Comparative Examples were subjected to a standard peel test in the above-described manner, and the area of the occupied region of the binder and the height of the occupied region were confirmed. Figures 4 to 9 are FE-SEM images of Examples 1 to 6, respectively, and Figures 10 and 11 are FE-SEM images of Comparative Examples 1 to 2, respectively.

The results were described in Table 1 below.

**[Table 1]**

| | Example | | | | | | Comparative Example | |
|---|---|---|---|---|---|---|---|---|
| | 1 | 2 | 3 | 4 | 5 | 6 | 1 | 2 |
| H (nm) | about 810 | about 817.5 | about 810 | about 525 | about 534 | about 535 | about 565 | about 500 |
| A (%) | 86.9 | 90.3 | 94.6 | 53.6 | 60 | 60.7 | 55.3 | 34.5 |
| W (weight%) | 4.1 | 4.1 | 4.1 | 2.3 | 2.3 | 2.3 | 4.1 | 2.3 |
| A/W | 21.2 | 22.0 | 23.1 | 23.3 | 26.1 | 26.4 | 13.5 | 15 |
| H: height of the occupied region of the binder (unit: nm) | | | | | | | | |
| A: area ratio of the occupied region of the binder (unit: %) | | | | | | | | |
| W: content of the binder in the active material layer (unit: weight%) | | | | | | | | |

From Table 1, it can be confirmed that in the case of Examples, a high occupied area ratio of the binder is secured relative to the binder content in the active material layer.

### Test Example 2. Confirmation of adhesion force

Adhesion force (unit: gf/20mm) evaluation results for Examples and Comparative Examples are shown in Table 2 below.

**[Table 2]**

| | Example | | | | | | Comparative Example | |
|---|---|---|---|---|---|---|---|---|
| | 1 | 2 | 3 | 4 | 5 | 6 | 1 | 2 |
| Adhesion force | 48 | 45.4 | 44.8 | 20.3 | 25.8 | 21.3 | 38.1 | 14.9 |

From Table 2, it can be confirmed that in the case of Examples, high adhesion force is secured relative to the binder content in the active material layer.

## Claims

1. An electrode, comprising:
a current collector; and
an active material layer on one or both sides of the current collector,
wherein the active material layer comprises an electrode active material and a particulate binder,
wherein a ratio (A/W) of an area ratio (A) of an occupied region of the binder on the current collector relative to a binder content (W) in the active material layer is 17 or more, which is confirmed according to the following standard peel test, and
wherein a ratio of a height of the occupied region of the binder relative to an average particle diameter of the particulate binder is 0.5 or more:
Standard peel test: a process of attaching a Scotch Magic Tape Cat. 810R on the active material layer, and then peeling off it is repeated until no component of the active material layer is observed on the Scotch Magic Tape Cat. 810R.

2. The electrode according to claim 1, further comprising a silicon-containing layer between the active material layer and the current collector.

3. The electrode according to claim 1 or 2, wherein the current collector is a film, sheet or foil made of one or more selected from the group consisting of stainless steel, aluminum, nickel, titanium, baked carbon, copper, carbon, stainless steel surface-treated with nickel, titanium or silver, and an aluminum-cadmium alloy.

4. The electrode according to any one of claims 1 to 3, wherein the binder comprises one or more selected from the group consisting of PVDF (poly(vinylidene fluoride)), PVA (poly(vinyl alcohol)), polyvinylpyrrolidone, tetrafluoroethylene, polyethylene, polypropylene, an ethylene-propylene-diene terpolymer (EPDM), a sulfonated EPDM, SBR (styrene-butadiene rubber), and fluororubber.

5. The electrode according to any one of claims 1 to 4, wherein the binder has an average particle diameter of 50 to 500nm.

6. The electrode according to any one of claims 1 to 5, wherein the electrode active material and the binder are particulates, and the ratio (D1/D2) of the average particle diameter (D1) of the electrode active material to the average particle diameter (D2) of the binder is in a range of 10 to 1000.

7. The electrode according to claim 6, wherein the electrode active material has an average particle diameter in a range of 1 µm to 100 µm.

8. The electrode according to claim 6, wherein the ratio (D90/D10) of the 90% volume cumulative particle diameter (D90) to the 10% volume cumulative particle diameter (D10) in the electrode active material is 15 or less.

9. The electrode according to any one of claims 1 to 8, wherein the binder in the active material layer has a content in a range of 0.5 to 10 weight%.

10. The electrode according to any one of claims 1 to 9, wherein the electrode active material is included in the active material layer in an amount of 1000 to 10000 parts by weight relative to 100 parts by weight of the binder.

11. The electrode according to any one of claims 1 to 10, wherein the active material layer has a thickness in a range of 10 µm to 500 µm.

12. A method for manufacturing the electrode of any one of claims 1 to 11 comprising:
forming a layer of slurry on the current collector,
wherein the slurry comprises a solvent having a dipole moment of 1.3D or more, the binder, and the electrode active material, and
wherein a silicon-containing layer is on the surface of the current collector on which the layer of the slurry is formed.

13. A method for manufacturing the electrode of any one of claims 1 to 11 comprising:
forming a layer of slurry on the current collector,
wherein the slurry comprises a solvent having a dipole moment of 1.3D or more, a binder having a solubility parameter in a range of 10 to 30 MPa^{1/2}, and the electrode active material, and
wherein a surface of the current collector on which the layer of the slurry is formed has a water contact angle of 50 degrees or more.

14. An electrochemical element comprising the electrode of any one of claims 1 to 11 as a positive electrode or a negative electrode.

15. A secondary battery comprising the electrode of any one of claims 1 to 11 as a negative electrode or a positive electrode.
